# EUROPEAN PATENT APPLICATION

(11) **EP 2 151 607 A1**
(43) Date of publication of application: **10.02.2010**
(21) Application number: 08828055.7
(22) Date of filing: 13.08.2008
(51) Int. Cl.: F16H 3/093, B62M 11/06, F16H 61/04, F16H 59/24, F16H 59/44, F16H 61/682

(54) **STEPPED AUTOMATIC TRANSMISSION AND VEHICLE WITH THE SAME**

(30) Priority: 21.08.2007 JP 2007214313; 08.08.2008 JP 2008204929
(71) Applicant: Yamaha Hatsudoki Kabushiki Kaisha, Iwata-shi, Shizuoka 438-8501 (JP)
(72) Inventor: OISHI, Akifumi, Iwata-shi Shizuoka 438-8501 (JP); MURAYAMA, Takuji, Iwata-shi Shizuoka 438-8501 (JP); HATA, Shinichiro, Iwata-shi Shizuoka 438-8501 (JP)
(74) Representative: Zimmermann, Tankred Klaus
(86) International application number: PCT/JP2008/064514
(87) International publication number: WO 2009/025218

(57) **Abstract**

[Task] To provide a stepped automatic transmission having high energy transmission efficiency.

[Means for Resolution] A first hydraulic transmission clutch 59 is engaged when the rotation speed of an input shaft 52 reaches a first rotation speed. A second hydraulic transmission clutch 70 is engaged when the rotation speed of an intermediate shaft 54 reaches a second rotation speed higher than the rotation speed of the intermediate shaft 54 when the first hydraulic transmission clutch 59 is engaged. A third power transmission mechanism 302 transmits the rotation of the intermediate shaft 54 to an output shaft 33 when the second hydraulic transmission clutch 70 is disengaged. A fourth power transmission mechanism 303 transmits the rotation of the intermediate shaft to the output shaft 33 when the second hydraulic transmission clutch 70 is engaged. The first hydraulic clutch 59 is brought into a disengaged state when hydraulic pressure is applied and into an engaged state when the hydraulic pressure is not applied.

## Description

### [Technical Field]

The present invention relates to a stepped automatic transmission and a vehicle including the same.

### [Background Art]

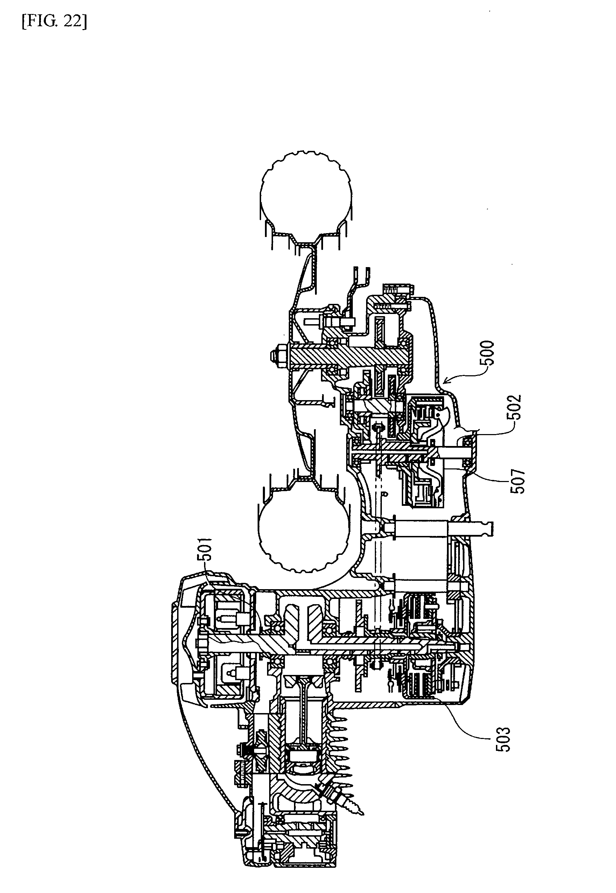

In recent years, a variety of stepped automatic transmissions have been proposed in, for example, Patent Document 1. FIG. 22 is a cross-sectional view showing a part of a stepped automatic transmission 500 disclosed in Patent Document 1. The stepped automatic transmission 500 is a three-speed stepped automatic transmission. As shown in FIG. 22, the stepped automatic transmission 500 includes an automatic centrifugal starting clutch 503 disposed on a crank shaft 501 and an automatic centrifugal high-speed clutch 507 disposed on a main shaft 502. In the stepped automatic transmission 500, switching from the first speed to the second speed is performed by the automatic centrifugal starting clutch 503. The automatic centrifugal starting clutch 503 is brought into an engaged state when the shift is the second speed and the third speed. Switching from the second speed to the third speed is performed by the automatic centrifugal high-speed clutch 507.
[Patent Document 1] JP-UM-B-62-023349

### [Disclosure of the Invention]

### [Problem that the Invention is to Solve]

However, in recent years, emissions of vehicles have been strictly regulated. In addition, as for stepped automatic transmissions, it is strongly required to improve energy transmission efficiency thereof. However, in the stepped automatic transmission 500 disclosed in Patent Document 1, both the automatic centrifugal starting clutch 503 for performing the switching from the first speed to the second speed and the automatic centrifugal high-speed clutch 507 for performing the switching from the second speed to the third speed are centrifugal clutches. Accordingly, there is a problem in that it is difficult to sufficiently increase energy transmission efficiency.

The invention is contrived in view of such a problem, and an object of the invention is to provide a stepped automatic transmission having high energy transmission efficiency.

### [Means for Solving the Problem]

A stepped automatic transmission according to the invention has an input shaft and an output shaft. The stepped automatic transmission according to the invention includes an intermediate shaft, a first hydraulic transmission clutch, a first power transmission mechanism, a second power transmission mechanism, a second hydraulic transmission clutch, a third power transmission mechanism, a fourth power transmission mechanism and an oil pump. The intermediate shaft is disposed between the input shaft and the output shaft on a power transmission path. The first hydraulic transmission clutch is engaged when the rotation speed of the input shaft reaches a first rotation speed. The first power transmission mechanism transmits the rotation of the input shaft to the intermediate shaft when the first hydraulic transmission clutch is disengaged. The second power transmission mechanism transmits the rotation of the input shaft to the intermediate shaft at a reduction gear ratio smaller than that of the first power transmission mechanism when the first hydraulic transmission clutch is engaged. The a second hydraulic transmission clutch is engaged when the rotation speed of the intermediate shaft reaches a second rotation speed higher than the rotation speed of the intermediate shaft when the first hydraulic transmission clutch is engaged. The third power transmission mechanism transmits the rotation of the intermediate shaft to the output shaft when the second hydraulic transmission clutch is disengaged. The fourth power transmission mechanism transmits the rotation of the intermediate shaft to the output shaft at a reduction gear ratio different from that of the third power transmission mechanism when the second hydraulic transmission clutch is engaged. The oil pump applies hydraulic pressure to the first and second hydraulic transmission clutches. The first hydraulic clutch is brought into a disengaged state when hydraulic pressure is applied. The first hydraulic clutch is brought into an engaged state when the hydraulic pressure is not applied.

A vehicle according to the invention has the stepped automatic transmission according to the invention.

### [Advantage of the Invention]

According to the invention, a stepped automatic transmission having high energy transmission efficiency can be provided.

### [Brief Description of the Drawings]

[FIG. 1] FIG. 1 is a left side view of a motorcycle;
[FIG. 2] FIG. 2 is a cross-sectional view of an engine unit;
[FIG. 3] FIG. 3 is a schematic left side view showing the arrangement of shafts of the engine unit;
[FIG. 4] FIG. 4 is a partial cross-sectional view of the engine unit;
[FIG. 5] FIG. 5 is a schematic left side view showing the arrangement of the shafts of the engine unit;
[FIG. 6] FIG. 6 is a schematic diagram showing the structure of the engine unit;
[FIG. 7] FIG. 7 is a partial cross-sectional view of the engine unit showing the structure of a group of clutches on the upstream side;
[FIG. 8] FIG. 8 is a partial cross-sectional view of the engine unit showing the structure of a group of clutches on the downstream side;
[FIG. 9] FIG. 9 is a schematic diagram showing an oil circuit.
[FIG. 10] FIG. 10 is a schematic diagram illustrating a power transmission path in the first speed in a transmission;
[FIG. 11] FIG. 11 is a schematic diagram illustrating a power transmission path in the second speed in the transmission;
[FIG. 12] FIG. 12 is a schematic diagram illustrating a power transmission path in the third speed in the transmission;
[FIG. 13] FIG. 13 is a schematic diagram illustrating a power transmission path in the fourth speed in the transmission;
[FIG. 14] FIG. 14 is a graph showing shift positions and hydraulic pressure supply to each clutch;
[FIG. 15] FIG. 15 is a cross-sectional view of the group of clutches on the downstream side in idling, in the first speed and in the second speed;
[FIG. 16] FIG. 16 is a cross-sectional view of the group of clutches on the upstream side in the first speed;
[FIG. 17] FIG. 17 is a cross-sectional view of the group of clutches on the upstream side in the second to fourth speeds;
[FIG. 18] FIG. 18 is a cross-sectional view of the group of clutches on the downstream side in the third speed;
[FIG. 19] FIG. 19 is a cross-sectional view of the group of clutches on the downstream side in the fourth speed;
[FIG. 20] FIG. 20 is a partial cross sectional view of the engine unit showing the structure of the group of clutches on the upstream side according to a first modified example;
[FIG. 21] FIG. 21 is a cross-sectional view of the group of clutches on the upstream side in the first speed; and
[FIG. 22] FIG. 22 is a cross-sectional view of a stepped automatic transmission disclosed in Patent Document 1.

### [Description of Reference Numerals and Signs]

1: MOTORCYCLE (VEHICLE)
31: STEPPED AUTOMATIC TRANSMISSION
33: OUTPUT SHAFT
52: INPUT SHAFT
54: SECOND ROTATION SHAFT (INTERMEDIATE SHAFT)
55: FIRST CLUTCH (CENTRIFUGAL CLUTCH)
59: THIRD CLUTCH (FIRST HYDRAULIC TRANSMISSION CLUTCH)
66: FOURTH CUTCH (THIRD HYDRAULIC TRANSMISSION CLUTCH)
66a: LEAK HOLE (COMMUNICATING HOLE)
70: SECOND CLUTCH (SECOND HYDRAULIC TRANSMISSION CLUTCH)
70a: LEAK HOLE (COMMUNICATING HOLE)
133: WORKING CHAMBER
137: WORKING CHAMBER
140: OIL PUMP
203a: LEAK HOLE (COMMUNICATING HOLE)
205: WORKING CHAMBER
300: FIRST POWER TRANSMISSION MECHANISM
301: SECOND POWER TRANSMISSION MECHANISM
302: THIRD POWER TRANSMISSION MECHANISM
303: FOURTH POWER TRANSMISSION MECHANISM
304: FIFTH POWER TRANSMISSION MECHANISM

### [Best mode for Carrying Out the Invention]

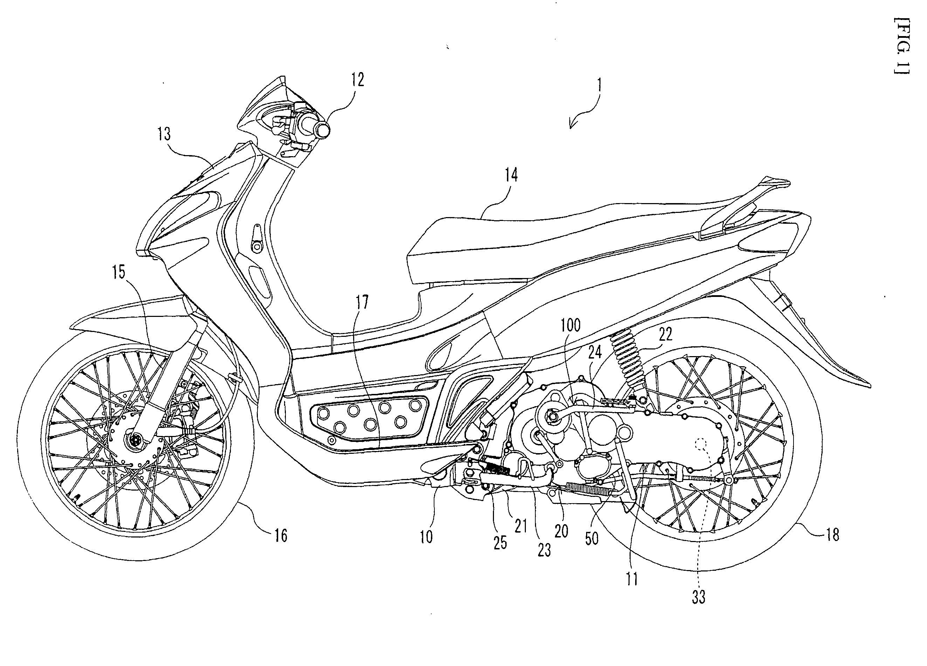

In this embodiment, as an example of a vehicle to which the invention is applied, a motorcycle 1 shown in FIG. 1 is described. Note that, in the invention, the vehicle is not limited to the motorcycle 1. The vehicle may be a four-wheeled vehicle or a straddle-type vehicle. Examples of the four-wheeled vehicle include an off-road vehicle. The straddle-type vehicle is a vehicle on which a rider rides by straddling. Examples of the straddle-type vehicle include a motorcycle and ATV (All Terrain Vehicle).

In the invention, the "motorcycle" indicates a motorcycle defined in a broad sense. Examples of the motorcycle include a motorcycle defined in a narrow sense, a moped, a scooter, and an off-road vehicle.

### (Schematic Structure of Motorcycle 1)

First, the schematic structure of the motorcycle 1 will be explained with reference to FIG. 1. Note that the terms front and rear, and left and right as used in the following description indicate the front and rear and the left and right as viewed by a rider seated on a seat 14 of the motorcycle 1.

As shown in FIG. 1, the motorcycle 1 includes a body frame 10. The body frame 10 includes a head pipe (not shown). The head pipe extends downward in a front section of the vehicle such that it is slightly inclined to the front. A steering shaft (not shown) is rotatably inserted into the head pipe. A handle 12 is provided at the upper end of the steering shaft. Moreover, a front fork 15 is connected to the lower end of the steering shaft. A front wheel 16 is rotatably attached to the lower end of the front fork 15.

A body cover 13 is attached to the body frame 10. The body cover 13 covers a part of the body frame 10. A sheet 14 on which the rider sits is attached to the body frame 10.

Foot steps 17 on which feet of the rider are put are provided on the left and right sides of the motorcycle 1 in a vehicle width direction. Further, a side stand 23 is attached to the body frame 10 substantially at the center of the vehicle.

In the motorcycle 1, an engine unit 20 is provided as a power unit. A rear wheel 18 is attached to an output shaft 33 of the engine unit 20.

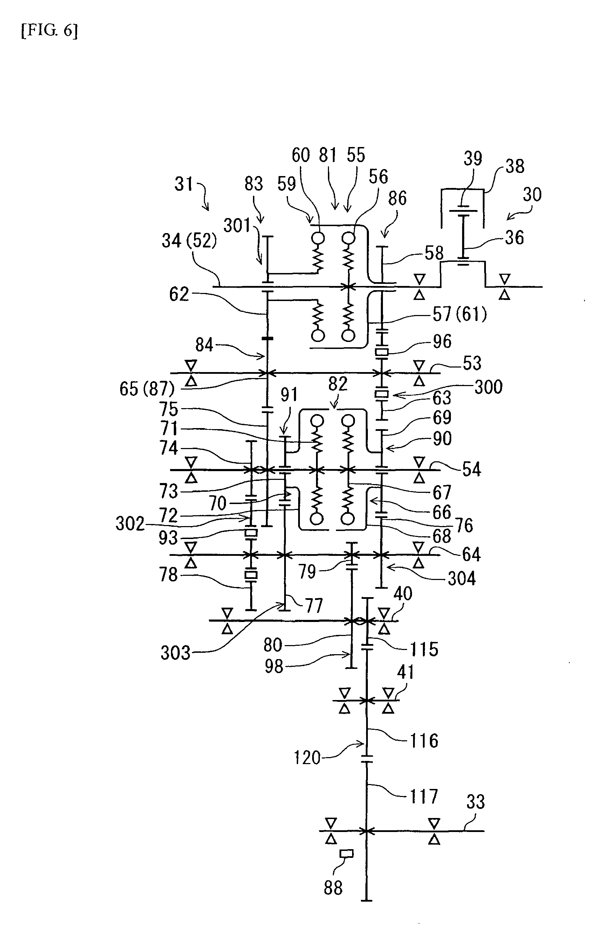

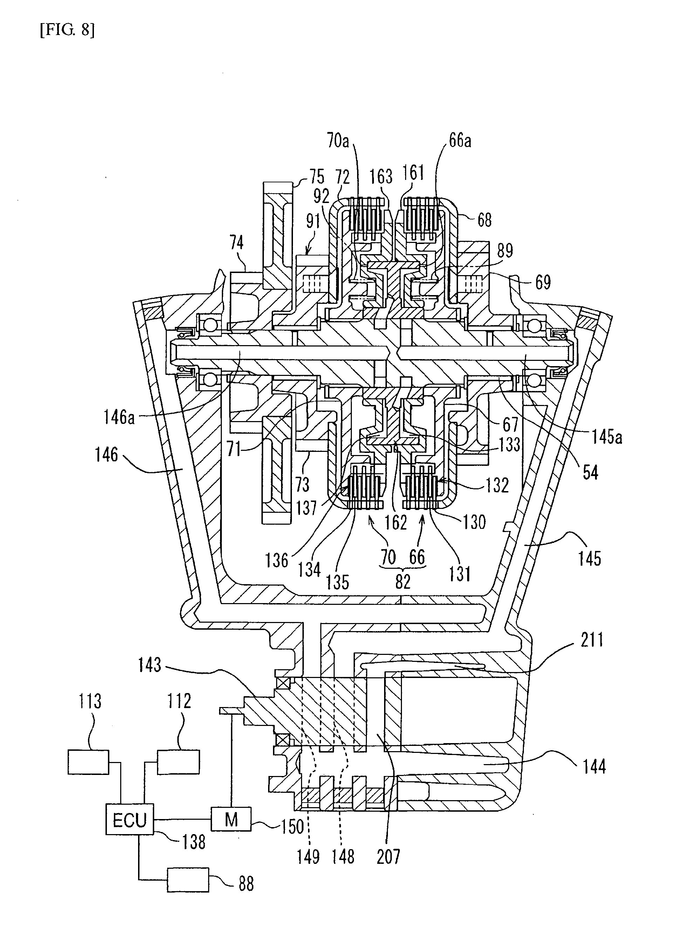

As shown in FIG. 6, in the invention, a vehicle speed sensor 88 is disposed on the output shaft 33. The vehicle speed sensor 88 detects a vehicle speed. The vehicle speed sensor 88 allows the detected vehicle speed to be output to an ECU (electronic control unit) 138 shown in FIG. 8.

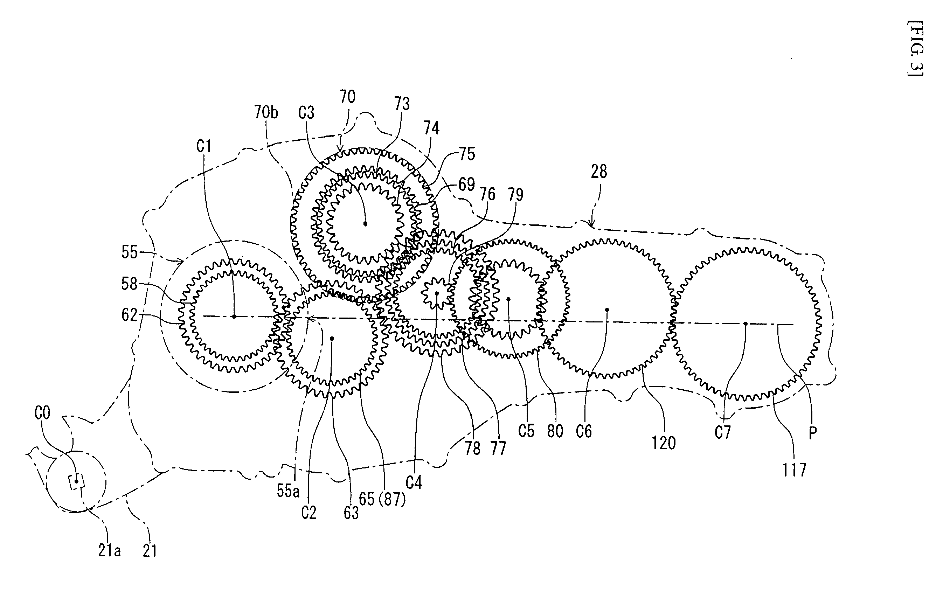

The engine unit 20 is a unit swing type engine unit. As shown in FIG. 1, the engine unit 20 is swingably suspended from the body frame 10. Specifically, a pivot shaft 25 extending in the vehicle width direction is attached to the body frame 10. As shown in FIG. 3, the engine unit 20 is provided with a casing 28. An engine bracket 21 as an attaching portion is provided in a front lower section of the casing 28. An attaching hole 21 a to which the pivot shaft 25 is fixed is formed in the engine bracket 21. The pivot shaft 25 is inserted into the attaching hole 21 a. Accordingly, the engine unit 20 is swingably attached to the body frame 10.

As shown in FIG. 1, a cushion unit 22 is attached between the engine unit 20 and the body frame 10. The swinging movement of the engine unit 20 is suppressed by the cushion unit 22.

### (Structure of Engine Unit 20)

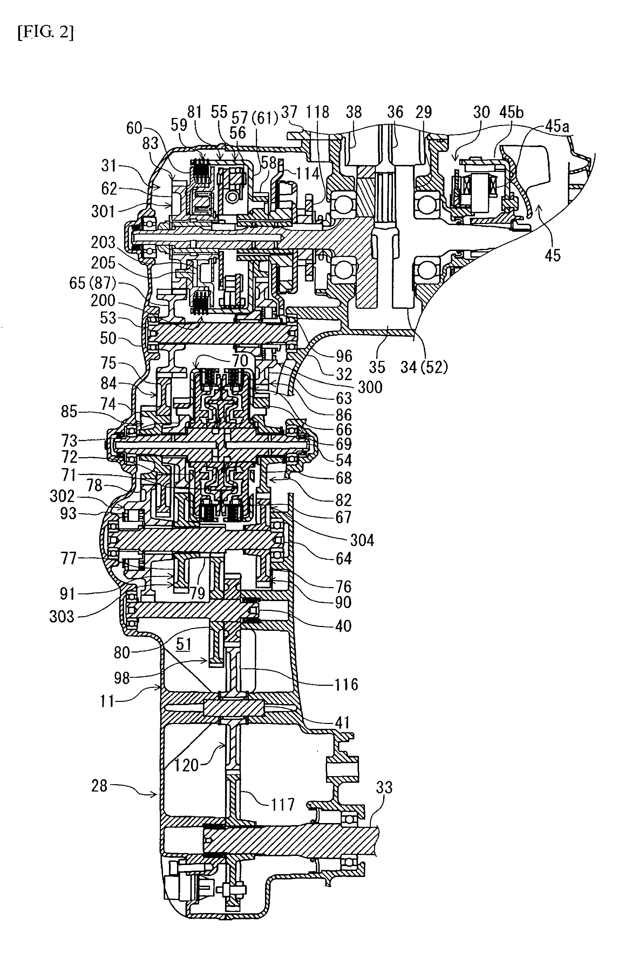

Next, the structure of the engine unit 20 will be described with reference to FIGS. 2 to 8. As shown in FIG. 2, the engine unit 20 is provided with an engine 30 as a power source and a stepped automatic transmission 31.

In this specification, the "power source" is a mechanism for generating power. Examples of the "power source" include an engine and a motor.

### - Engine 30 -

The engine 30 includes a crank case 32. The casing 28 is defined by the crank case 32, a transmission cover 50 to be described later and a generator cover (not shown).

In the crank case 32, a crank chamber 35 is formed. A crank shaft 34 extending in the vehicle width direction is disposed in the crank chamber 35. A connecting rod 36 is connected to the crank shaft 34 by a crank pin 29. A piston 39 shown in FIG. 6 is attached to the tip end of the connecting rod 36.

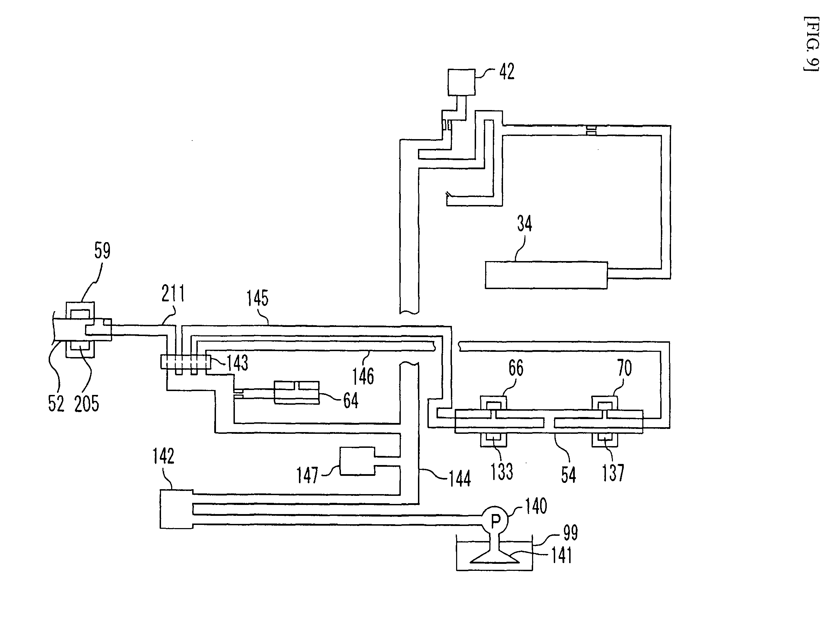

A cylinder body 37 is connected to a front section of the crank case 32. A cylinder head 42 shown in FIG. 9 is connected to the tip end of the cylinder body 37. As shown in FIG. 2, in the cylinder body 37, a cylinder 38 in which the piston 39 shown in FIG. 6 is disposed is defined.

As shown in FIGS. 1, 4 and 5, the engine 30 is provided with a kick starter 100 and a starter 101. The rider of the motorcycle 1 can operate the kick starter 100 or drive the starter 101 to start the engine 30.

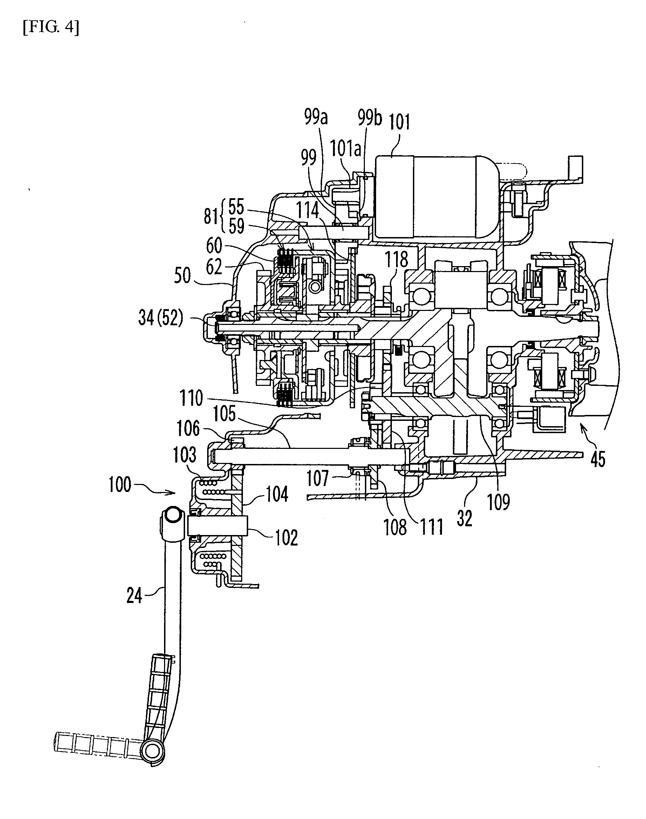

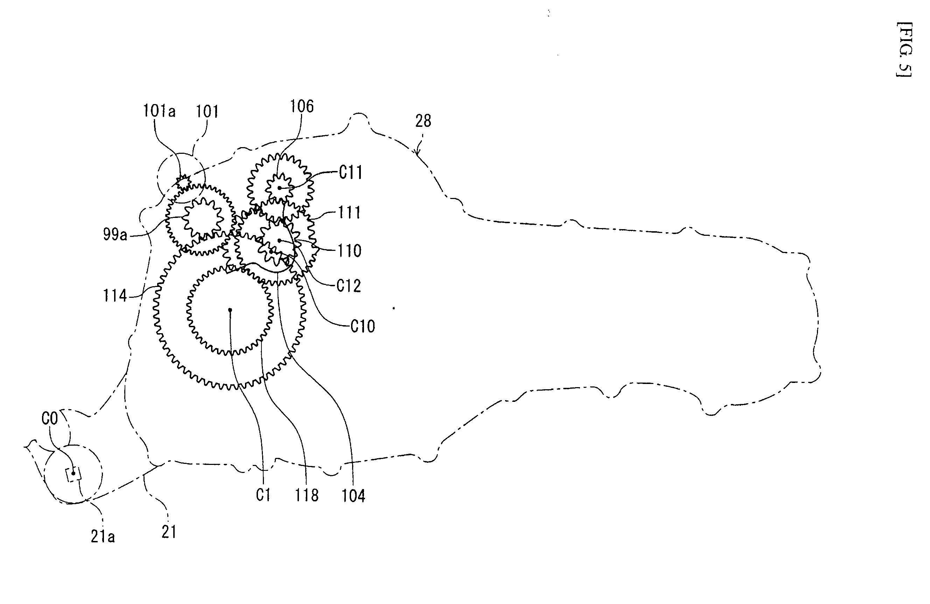

As shown in FIG. 4, the kick starter 100 has a kick pedal 24. The kick pedal 24 is disposed on the left side of the transmission cover 50. The kick pedal 24 is attached to a kick shaft 102 shown in FIG. 4. The kick shaft 102 is supported by the transmission cover 50. As shown in FIG. 5, an axis C10 of the kick shaft 102 is disposed on the rear and upper side of an axis C1 of the crank shaft 34.

A compression coil spring 103 is provided between the kick shaft 102 and the crank case 32. The compression coil spring applies, to the kick shaft 102 rotated by the rider's operation, an urging force in a reverse rotating direction.

A shaft 105 is disposed on the upper side of the kick shaft 102. The shaft 105 is disposed over a range from the transmission cover 50 to the crank case 32 in the vehicle width direction. As shown in FIG. 5, an axis C11 of the shaft 105 is disposed substantially on the upper side of the axis C 10 of the kick shaft 102. The axis C11 of the shaft 105 and the axis C 10 of the kick shaft 102 are disposed substantially at the same position in the front-rear direction.

As shown in FIG. 4, a gear 106 is attached to the left end of the shaft 105. The gear 106 meshes with a gear 104 attached to the left end of the kick shaft 102.

The right end of the shaft 105 is provided with a ratchet 107 and a gear 108. The ratchet 107 cannot rotate with respect to the shaft 105. In addition, the ratchet 107 can be displaced with respect to the shaft 105 in the axial direction of the shaft 105. The gear 108 can rotate with respect to the shaft 105.

A gear 108 meshes with a gear 110. The gear 110 is provided at the left end of a balancer shaft 109. The gear 110 cannot rotate with respect to the balancer shaft 109. In addition, the balancer shaft 109 is provided with a gear 111. The gear 111 cannot rotate with respect to the balancer shaft 109. The gear 111 meshes with a gear 118. The gear 118 cannot rotate with respect to the crank shaft 34.

In a state where the kick pedal 24 is not operated, the ratchet 107 and the gear 108 do not mesh with each other. When the rider operates the kick pedal 24 shown in FIG. 1, the shaft 105 rotates. Along with the rotation of the shaft 105, the ratchet 107 is displaced to the right side. Accordingly, the ratchet 107 meshes with the gear 108. Therefore, the rotation of the kick shaft 102 is transmitted to the gear 108. As a result, the rotation of the kick pedal 24 is transmitted to the crank shaft 34 via the shafts 102, 105 and 109 and the gears 104, 106, 107, 108, 110, 111 and 118.

As shown in FIG. 5, the starter 101 is disposed on the upper and slightly front side of the axis C1 of the crank shaft 34. As shown in FIG. 4, a gear 101a is formed on a rotation shaft of the starter 101. The gear 101a meshes with a gear 99a. A shaft 99 is provided with the gear 99a. The gear 99a can rotate with respect to the shaft 99. In addition, the shaft 99 is provided with a gear 99b. The gear 99b can rotate with respect to the shaft 99. The gear 99b meshes with a gear 114. The crank shaft 34 is provided with the gear 114. The gear 114 cannot rotate with respect to the crank shaft 34. Accordingly, the rotation of the starter 101 is transmitted to the crank shaft 34 via the gears 101a, 99a, 99b and 114 and the shaft 99.

### - Generator 45 -

As shown in FIG. 2, a generator 45 is attached to the left end of the crank shaft 34. The generator 45 includes an inner 45a and an outer 45b. The inner 45a is attached so as not to rotate with respect to the crank case 32. The outer 45b is attached to the left end of the crank shaft 34. The outer 45b rotates together with the crank shaft 34. Accordingly, when the crank shaft 34 rotates, the outer 45b rotates relatively with respect to the inner 45a. Thus, power generation is performed.

### - Structure of Stepped Automatic Transmission 31-

The transmission cover 50 is attached to the left side of the crank case 32. The transmission cover 50 and the crank case 32 define a transmission housing 51.

The stepped automatic transmission 31 is disposed in the transmission housing 51. The stepped automatic transmission 31 is a four-speed stepped automatic transmission. Specifically, the stepped automatic transmission 31 is a so-called gear train type stepped automatic transmission in which power is transmitted from an input shaft 52 to the output shaft 33 via a plurality of pairs of shift gears. However, the stepped automatic transmission according to the invention is not limited to the gear train type stepped automatic transmission. The stepped automatic transmission according to the invention may be a transmission using a power transmission chain. For example, power transmission between a fourth rotation shaft 40 to be described later and the output shaft 33 may be performed by the power transmission chain.

The stepped automatic transmission 31 has the input shaft 52. In this embodiment, the input shaft 52 is formed by the same rotation shaft as the crank shaft 34. However, the invention is not limited to this structure. For example, the input shaft 52 and the crank shaft 34 are formed by separate rotation shafts, respectively. In this case, the input shaft 52 and the crank shaft 34 may be disposed coaxially or eccentrically.

The stepped automatic transmission 31 includes total five rotation shafts including a first rotation shaft 53, a second rotation shaft 54, a third rotation shaft 64, the fourth rotation shaft 40 and a fifth rotation shaft 41 on a power transmission path between the input shaft 52 and the output shaft 33. The input shaft 52, the first rotation shaft 53, the second rotation shaft 54, the third rotation shaft 64, the fourth rotation shaft 40, the fifth rotation shaft 41 and the output shaft 33 are disposed substantially in parallel with each other.

### - Group of Clutches 81 on the Upstream Side -

The gear structure of the stepped automatic transmission 31 is shown in FIG. 6. FIG. 6 is a view schematically showing the gear structure of the stepped automatic transmission 31. Accordingly, sizes of the clutches and gears shown in FIG. 6 are different from actual sizes thereof.

As shown in FIG. 6 and 2, the input shaft 52 is provided with a group of clutches 81 on the upstream side. The group of clutches 81 on the upstream side includes a first clutch 55 and a third clutch 59 as a first hydraulic transmission clutch.

In this embodiment, the first clutch 55 is a shoe type centrifugal clutch. The third clutch 59 is a multiplate hydraulic clutch.

The first clutch 55 includes an inner 56 and an outer 57. The inner 56 is provided so as not to rotate with respect to the input shaft 52. Accordingly, the inner 56 rotates together with the rotation of the input shaft 52. On the other hand, the outer 57 can rotate with respect to the input shaft 52. When the rotation speed of the input shaft 52 becomes higher than a predetermined fourth rotation speed, the inner 56 and the outer 57 come into contact with each other due to centrifugal force acting on the inner 56. Thus, the first clutch 55 is brought into an engaged state. Note that, when the inner 56 and the outer 57 are rotating in the engaged state, if the rotation speed thereof becomes lower than a predetermined rotation speed, the centrifugal force acting on the inner 56 is reduced. As a result, the inner 56 and the outer 57 separate. Thus, the first clutch 55 is disengaged.

A first gear 58 is provided on the outer 57 of the first clutch 55 so as not to rotate with respect to the outer 57. The first gear 58 rotates together with the outer 57 of the first clutch 55. On the other hand, a second gear 63 is provided on the first rotation shaft 53. The second gear 63 meshes with the first gear 58. The first gear 58 and the second gear 63 form a first pair of shift gears 86. In this embodiment, the first pair of shift gears 86 is a pair of first speed shift gears.

The second gear 63 is a so-called one-way gear. Specifically, the second gear 63 transmits the rotation of the first gear 58 to the first rotation shaft 53. On the other hand, the second gear 63 does not transmit the rotation of the first rotation shaft 53 to the input shaft 52. That is, the second gear 63 also serves as a one-way rotation transmission mechanism 96.

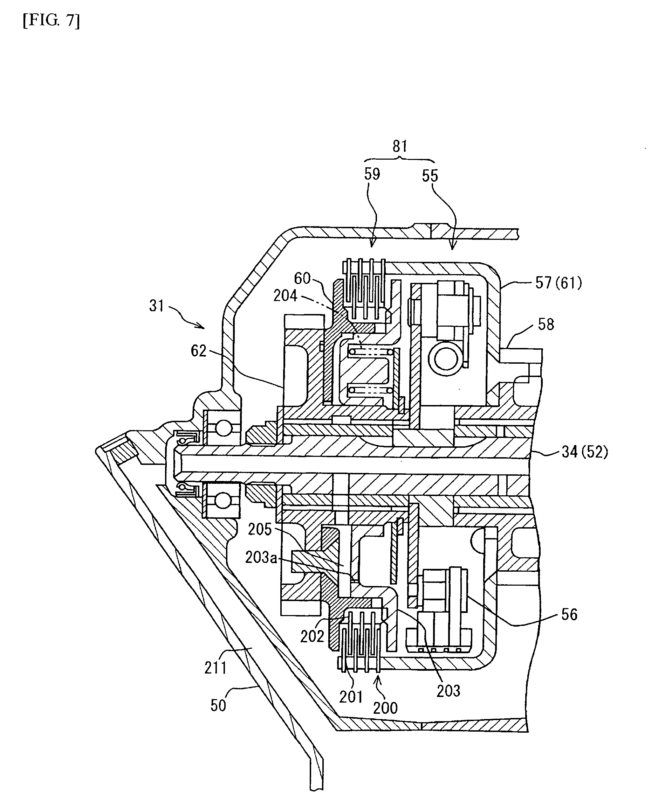

As shown in FIG. 7, the third clutch 59 includes an inner 60, an outer 61, a group of plates 200 and a pressure plate 203. The group of plates 200 includes a plurality of friction plates 201 and a plurality of clutch plates 202. The plurality of friction plates 201 and the plurality of clutch plates 202 are alternately disposed in the axial direction of the crank shaft 34. The plurality of friction plates 201 cannot rotate with respect to the outer 61. The plurality of clutch plates 202 cannot rotate with respect to the inner 60.

The pressure plate 203 is disposed on the right side of the inner 60 in the vehicle width direction. The pressure plate 203 can be displaced in the vehicle width direction. The pressure plate 203 is urged to the left in the vehicle width direction by a compression coil spring 204.

A working chamber 205 is defined between the pressure plate 203 and the inner 60. As described below, the working chamber 205 is supplied with oil from an oil pump 140 shown in FIG. 9.

When the working chamber 205 is not supplied with oil, the pressure plate 203 is urged to the left in the vehicle width direction by the compression coil spring 204. Accordingly, the group of plates 200 is in a pressure contact state by an urging force of the compression coil spring 204. As a result, the third clutch 59 is brought into an engaged state.

When the working chamber 205 is supplied with oil, hydraulic pressure of the working chamber 205 becomes higher than the urging force of the compression coil spring 204. Therefore, the pressure plate 203 moves to the right in the vehicle width direction. Accordingly, the group of plates 200 is brought into a non-pressure contact state. Thus, the third clutch 59 is brought into a disengaged state.

A leak hole 203a connected to the working chamber 205 is formed in the third clutch 59. The oil in the working chamber 205 is discharged from the leak hole 203a. Accordingly, when the oil supply from the oil pump 140 to the working chamber 205 is stopped, the hydraulic pressure in the working chamber 205 is rapidly reduced. Thus, the third clutch 59 can be rapidly disengaged.

In this specification, the "leak hole" is a hole for leaking the oil. Typically, the leak hole is formed in an annular shape in cross-section. However, the shape of the leak hole is not particularly limited and is properly set in response to the characteristic of the clutch. In addition, for example, the leak hole may be formed by a fitting clearance between a boss portion defining the working chamber and the pressure plate.

The flow path area of the leak hole is not particularly limited is size as far as the clutch is brought into an engaged state when the working chamber is supplied with hydraulic pressure. For example, in case of the leak hole having a substantially annular cross-section, a diameter of the leak hole is generally about 1 to 2 mm.

As shown in FIGS. 2 and 6, a ninth gear 62 is provided on the inner 60 of the third clutch 59. The ninth gear 62 rotates together with the inner 60. In addition, a tenth gear 65 is provided on the first rotation shaft 53. The tenth gear 65 meshes with the ninth gear 62. The tenth gear 65 and the ninth gear 62 form a third pair of shift gears 83. The third pair of shift gears 83 has a reduction gear ratio different from that of the first pair of shift gears 86. Specifically, the third pair of shift gears 83 has a reduction gear ratio smaller than the reduction gear ratio of the first pair of shift gears 86. The third pair of shift gears 83 is a pair of second speed shift gears.

In this embodiment, the outer 57 and the outer 61 are formed by the same member. However, the invention is not limited to this structure. The outer 57 and the outer 61 may be formed by separate members.

The rotation speed of the input shaft 52 when the first clutch 55 is engaged and the rotation speed of the input shaft 52 when the third clutch 59 is engaged are different from each other. Specifically, the rotation speed of the input shaft 52 when the first clutch 55 is engaged is set to be lower than the rotation speed of the input shaft 52 when the third clutch 59 is engaged. More specifically, the first clutch 55 is brought into an engaged state when the rotation speed of the input shaft 52 is equal to or higher than the fourth rotation speed. On the other hand, the first clutch 55 is brought into a disengaged state when the rotation speed of the input shaft 52 is lower than the fourth rotation speed. The third clutch 59 is engaged when the rotation speed of the input shaft 52 is equal to or higher than a first rotation speed higher than the fourth rotation speed.

In this embodiment, the tenth gear 65 also functions as a third gear 87. A fourth gear 75 is provided on the second rotation shaft 54. The fourth gear 75 cannot rotate with respect to the second rotation shaft 54. The fourth gear 75 rotates together with the second rotation shaft 54. The third gear 87 functioning as the tenth gear 65 meshes with the fourth gear 75. The third gear 87 functioning as the tenth gear 65 and the fourth gear 75 form a first pair of transmission gears 84. By the first pair of transmission gears 84 and the first pair of shift gears 86, a first power transmission mechanism 300 is formed. When the first clutch 55 is in an engaged state and the third clutch 59 is in a disengaged state, the rotation of the input shaft 52 is transmitted to the second rotation shaft 54 by the first power transmission mechanism 300.

A second power transmission mechanism 301 is formed by the first pair of transmission gears 84 and the third pair of shift gears 83. When the first and third clutches 55 and 59 are in an engaged state, the rotation of the input shaft 52 is transmitted to the second rotation shaft 54 by the second power transmission mechanism 301.

A fifth gear 74 is provided on the second rotation shaft 54. The fifth gear 74 cannot rotate with the second rotation shaft 54. The fifth gear 74 rotates together with the second rotation shaft 54. Moreover, a sixth gear 78 is provided on the third rotation shaft 64. The sixth gear 78 cannot rotate with the third rotation shaft 64. The third rotation shaft 64 rotates together with the sixth gear 78. The fifth gear 74 and the sixth gear 78 mesh with each other. The fifth gear 74 and the sixth gear 78 form a second pair of transmission gears 85.

The sixth gear 78 is a so-called one-way gear. Specifically, the sixth gear 78 transmits the rotation of the second rotation shaft 54 to the third rotation shaft 64. On the other hand, the sixth gear 78 does not transmit the rotation of the third rotation shaft 64 to the second rotation shaft 54. Specifically, the sixth gear 78 includes a one-way rotation transmission mechanism 93.

Note that it is not essential in the invention that the sixth gear 78 is a one-way gear. For example, the sixth gear 78 may be a normal gear and the fifth gear 74 may be a so-called one-way gear. In other words, the fifth gear 74 may also serve as a one-way rotation transmission mechanism. Specifically, a structure may be adopted in which the fifth gear 74 transmits the rotation of the second rotation shaft 54 to the sixth gear 78, but it does not transmit the rotation of the sixth gear 78 to the second rotation shaft 54.

### - Group of Clutches 82 on the Downstream Side -

The second rotation shaft 54 is provided with a group of clutches 82 on the downstream side. The group of clutches 82 on the downstream side is located to the rear of the group of clutches 81 on the upstream side. As shown in FIG. 6, the group of clutches 82 on the downstream side includes a second clutch 70 as a second hydraulic transmission clutch and a fourth clutch 66 as a third hydraulic transmission clutch. The second clutch 70 and the fourth clutch 66 are hydraulic clutches. Specifically, in this embodiment, the second clutch 70 and the fourth clutch 66 are multiplate hydraulic clutches.

The rotation speed of the second rotation shaft 54 when the second clutch 70 is engaged and the rotation speed of the second rotation shaft 54 when the fourth clutch 66 is engaged are different from each other. In this embodiment, specifically, a second rotation speed as the rotation speed of the second rotation shaft 54 when the second clutch 70 is engaged is lower than a third rotation speed as the rotation speed of the second rotation shaft 54 when the fourth clutch 66 is engaged.

The second clutch 70 is provided with an inner 71 and an outer 72. The inner 71 is provided so as not to rotate with the second rotation shaft 54. Accordingly, the inner 71 rotates together with the rotation of the second rotation shaft 54. On the other hand, the outer 72 can rotate with respect to the second rotation shaft 54. In a state where the second clutch 70 is disengaged, when the second rotation shaft 54 rotates, the inner 71 rotates together with the second rotation shaft 54, but the outer 72 does not rotate together with the second rotation shaft 54. In a state where the second clutch 70 is engaged, both the inner 71 and the outer 72 rotate together with the second rotation shaft 54.

A seventh gear 73 is attached to the outer 72 of the second clutch 70. The seventh gear 73 rotates together with the outer 72. In addition, an eighth gear 77 is provided on the third rotation shaft 64. The eighth gear 77 cannot rotate with respect to the third rotation shaft 64. The eighth gear 77 rotates together with the third rotation shaft 64. The seventh gear 73 and the eighth gear 77 mesh with each other. Therefore, the rotation of the outer 72 is transmitted to the third rotation shaft 64 via the seventh gear 73 and the eighth gear 77.

The seventh gear 73 and the eighth gear 77 form a second pair of shift gears 91. The second pair of shift gears 91 has a reduction gear ratio different from the reduction gear ratios of the first pair of shift gears 86, the third pair of shift gears 83 and a fourth pair of shift gears 90.

The fourth clutch 66 is provided with an inner 67 and an outer 68. The inner 67 is provided so as not to rotate with the second rotation shaft 54. Accordingly, the inner 67 rotates together with the rotation of the second rotation shaft 54. On the other hand, the outer 68 can rotate with respect to the second rotation shaft 54. In a state where the fourth clutch 66 is disengaged, when the second rotation shaft 54 rotates, the inner 67 rotates together with the second rotation shaft 54, but the outer 68 does not rotate together with the second rotation shaft 54. In a state where the fourth clutch 66 is engaged, both the inner 67 and the outer 68 rotate together with the second rotation shaft 54.

An eleventh gear 69 is attached to the outer 68 of the fourth clutch 66. The eleventh gear 69 rotates together with the outer 68. In addition, a twelfth gear 76 is provided on the third rotation shaft 64. The twelfth gear 76 cannot rotate with the third rotation shaft 64. The twelfth gear 76 rotates together with the third rotation shaft 64. The eleventh gear 69 and the twelfth gear 76 mesh with each other. Therefore, the rotation of the outer 68 is transmitted to the third rotation shaft 64 via the eleventh gear 69 and the twelfth gear 76.

The twelfth gear 76 and the eleventh gear 69 form a fourth pair of shift gears 90. The fourth pair of shift gears 90 has a reduction gear ratio different from the reduction gear ratios of the first pair of shift gears 86 and the third pair of shift gears 83.

A thirteenth gear 79 is provided on the third rotation shaft 64. The thirteenth gear 79 cannot rotate with respect to the third rotation shaft 64. The thirteenth gear 79 rotates together with the third rotation shaft 64. In addition, a fourteenth gear 80 is provided on the fourth rotation shaft 40. The fourteenth gear 80 cannot rotate with respect to the fourth rotation shaft 40. The fourteenth gear 80 and the thirteenth gear 79 form a third pair of transmission gears 98.

A fifteenth gear 115 is provided on the fourth rotation shaft 40. The fifteenth gear 115 cannot rotate with respect to the fourth rotation shaft 40. The fifteenth gear 115 meshes with a seventeenth gear 117 provided so as not to rotate with respect to the output shaft 33 via a sixteenth gear 116 provided so as not to rotate with respect to the fifth rotation shaft 41. A fourth pair of transmission gears 120 formed by the fifteenth gear 115, the sixteenth gear 116 and the seventeenth gear 117 transmits the rotation of the fourth rotation shaft 40 to the output shaft 33. The fourth pair of transmission gears 120, the second pair of transmission gears 85 and the third pair of transmission gears 98 form a third power transmission mechanism 302. When the second and fourth clutches 70 and 66 are not engaged, the third power transmission mechanism 302 transmits the rotation of the second rotation shaft 54 to the output shaft 33.

The fourth pair of transmission gears 120, the third pair of shift gears 83 and the third pair of transmission gears 98 form a fourth power transmission mechanism 303. When the second clutch is engaged, the fourth power transmission mechanism 303 transmits the rotation of the second rotation shaft 54 to the output shaft 33.

The fourth pair of transmission gears 120, the fourth pair of shift gears 90 and the third pair of transmission gears 98 form a fifth power transmission mechanism 304. When the fourth clutch 66 is engaged, the fifth power transmission mechanism 304 transmits the rotation of the second rotation shaft 54 to the output shaft 33.

### - Detailed Structure of Group of Clutches 82 on the Downstream Side -

Next, with reference to mainly FIG. 8, the group of clutches 82 on the downstream side will be described in further detail.

The second clutch 70 is provided with a group of plates 136. The group of plates 136 includes a plurality of friction plates 134 and a plurality of clutch plates 135. The plurality of friction plates 134 and the plurality of clutch plates 135 are alternately disposed in the vehicle width direction. The friction plates 134 cannot rotate with respect to the outer 72. Further, the clutch plates 135 cannot rotate with respect to the inner 71.

The inner 71 cannot rotate with respect to the outer 72. A pressure plate 163 is disposed in the inner 71 at a side opposite to the outer 72 in the vehicle width direction on the inner 71. The pressure plate 163 is urged to the right in the vehicle width direction by a compression coil spring 92. That is, the pressure plate 163 is urged to the boss portion 162 side by the compression coil spring 92.

A working chamber 137 is defined between the boss portion 162 and the pressure plate 163. The working chamber 137 is filled with oil. When the hydraulic pressure in the working chamber 137 increases, the pressure plate 163 is displaced in a direction to separate from the boss portion 162. Accordingly, the distance between the pressure plate 163 and the inner 71 is reduced. Thus, the group of plates 136 is brought into a pressure contact state. As a result, the inner 71 and the outer 72 rotate together, and the second clutch 70 is brought into an engaged state.

On the other hand, when the pressure in the working chamber 137 decreases, the pressure plate 163 is displaced to the boss portion 162 side by the compression coil spring 92. Thus, the group of plates 136 is released from the pressure contact state. As a result, the inner 71 and the outer 72 can rotate relative to each other, and the second clutch 70 is disengaged.

The fourth clutch 66 is provided with a group of plates 132. The group of plates 132 includes a plurality of friction plates 130 and a plurality of clutch plates 131. The plurality of friction plates 130 and the plurality of clutch plates 131 are alternately disposed in the vehicle width direction. The friction plates 130 cannot rotate with respect to the outer 68. Further, the clutch plates 131 cannot rotate with respect to the inner 67.

The inner 67 can rotate with respect to the outer 68 and cannot be displaced in the vehicle width direction. A pressure plate 161 is disposed in the inner 67 at a side opposite to the outer 68 in the vehicle width direction. The pressure plate 161 is urged to the left in the vehicle width direction by a compression coil spring 89. That is, the pressure plate 161 is urged to the boss portion 162 side by the compression coil spring 89.

A working chamber 133 is defined between the boss portion 162 and the pressure plate 161. The working chamber 133 is filled with oil. When the hydraulic pressure in the working chamber 133 increases, the pressure plate 161 is displaced in a direction to separate from the boss portion 162. Accordingly, the distance between the pressure plate 161 and the inner 67 is reduced. Thus, the group of plates 132 is brought into a pressure contact state. As a result, the inner 67 and the outer 68 rotate together, and the fourth clutch 66 is brought into an engaged state.

When the pressure in the working chamber 133 decreases, the pressure plate 161 is displaced to the boss portion 162 side by the compression coil spring 89. Thus, the group of plates 132 is released from the pressure contact state. As a result, the inner 67 and the outer 68 can rotate relative to each other, and the fourth clutch 66 is disengaged.

Small leak holes 70a and 66a communicating with the working chambers 133 and 137 are formed in the second clutch 70 and the fourth clutch 66, respectively. In the second clutch 70 and the fourth clutch 66, gaps between the inners 71 and 67 and the outers 72 and 68 are not sealed, respectively. Thus, the oil in the working chambers 133 and 137 can be rapidly discharged when the clutches 70 and 66 are disengaged. Therefore, according to this embodiment, the responses of the clutches 70 and 66 can be improved. In addition, by the oil scattering from the leak holes 70a and 66a or the gap between the inner 71 and the outer 72, other sliding sections are lubricated.

### - Oil Feed Path -

As shown in FIG. 9, the working chamber 205 of the third clutch 59, the working chamber 133 of the fourth clutch 66 and the working chamber 137 of the second clutch 70 are supplied with oil accumulated in an oil reservoir 99 provided at the bottom of the crank chamber 35 by the oil pump 140.

A strainer 141 is immersed in the oil reservoir 99. The strainer 141 is connected to the oil pump 140 driven by the rotation of the crank shaft 34. When the oil pump 140 is driven, the oil accumulated in the oil reservoir 99 is pumped up via the strainer 141.

A first oil path 144 is connected to the oil pump 140. An oil cleaner 142 and a relief valve 147 are provided in the middle of the first oil path 144. The pumped oil is purified by the oil cleaner 142. Further, by the relief valve 147, the pressure in the first oil path 144 is suppressed so as not to exceed a predetermined pressure.

The first oil path 144 is connected to the crank shaft 34 and the cylinder head 42. The oil from the oil pump 140 is supplied to the crank shaft 34 and to a sliding section in the cylinder head 42 via the first oil path 144.

The first oil path 144 is connected to a second oil path 145, a third oil path 146 and a fourth oil path 211. As shown in FIG. 8, the second oil path 145 is connected from a valve 143 to the right end of the second rotation shaft 54 via the crank case 32 shown in FIG. 2. The second oil path 145 reaches the working chamber 133 from the right end of the second rotation shaft 54 via the inside of the second rotation shaft 54. Accordingly, the oil from the oil pump 140 is supplied to the working chamber 133 of the fourth clutch 66 via the first oil path 144 and the second oil path 145.

On the other hand, the third oil path 146 is connected from the valve 143 to the left end of the second rotation shaft 54 via the transmission cover 50. The third oil path 146 reaches the working chamber 137 from the left end of the second rotation shaft 54 via the inside of the second rotation shaft 54. Accordingly, the oil from the oil pump 140 is supplied to the working chamber 137 of the second clutch 70 via the first oil path 144 and the third oil path 146.

The fourth oil path 211 is connected from the valve 143 to the left end of the input shaft 52 via the transmission cover 50. The fourth oil path 211 reaches the working chamber 205 from the left end of the input shaft 52 via the inside of the input shaft 52. Accordingly, the oil from the oil pump 140 is supplied to the working chamber 205 of the third clutch 59 via the first oil path 144 and the fourth oil path 211.

In this manner, in the motorcycle 1, the oil for lubricating the engine unit 20 is also used as working oil for the second, third and fourth clutches 70, 59 and 66.

The engagement/disengagement of the fourth oil path 211, the second oil path 145, the third oil path 146 and the first oil path 144 is performed by the valve 143. As shown in FIG. 8, a motor 150 is attached to the valve 143. The motor 150 drives the valve 143. Accordingly, the fourth oil path 211, the second oil path 145, the third oil path 146 and the first oil path 144 are engaged/disengaged.

Specifically, the ECU 138 serving as a control portion is connected to the motor 150. The vehicle speed sensor 88, a throttle opening degree sensor 112 and a memory 113 are connected to the ECU 138. The throttle opening degree sensor 112 detects a throttle opening degree. The vehicle speed sensor 88 detects a speed of the vehicle. In addition, the valve 143 is provided with a potentiometer (not shown). The potentiometer detects an angle of the valve 143. The potentiometer is also connected to the ECU 138.

The ECU 138 controls the motor 150 based on at least one of the throttle opening degree and the vehicle speed. In this embodiment, the ECU 138 controls the motor 150 based on both the throttle opening degree and the vehicle speed. Specifically, the ECU 138 applies the throttle opening degree and the vehicle speed to a V-N diagram read from the memory 113 to calculate a target rotation angle of the valve 143. The ECU 138 controls the motor 150 based on the calculate target rotation angle and the current angle of the valve 143 detected by the potentiometer.

When the motor 150 is driven by the ECU 138 and the valve 143 is disposed at a first rotation angle, a first internal path 149 is connected to the first oil path 144 and the third oil path 146. Accordingly, the second clutch 70 is brought into an engaged state. On the other hand, the first oil path 144, the second and fourth oil paths 145 and 211 are brought into a disconnected state. Thus, the third clutch 59 is brought into an engaged state and the fourth clutch 66 is brought into a disengaged state.

When the motor 150 is driven by the ECU 138 and the valve 143 is disposed at a second rotation angle, a second internal path 148 is connected to the first oil path 144 and the second oil path 145. Accordingly, the fourth clutch 66 is brought into an engaged state. On the other hand, the first oil path 144 and the third and fourth oil paths 146 and 211 are brought into a disconnected state. Thus, the third clutch 59 is brought into an engaged state and the second clutch 70 is brought into a disengaged state.

When the motor 150 is driven by the ECU 138 and the valve 143 is disposed at a third rotation angle, a third internal path 207 is connected to the first oil path 144 and the fourth oil path 211. Accordingly, the third clutch 59 is brought into a disengaged state. On the other hand, the first oil path 144 and the second and third oil paths 145 and 146 are brought into a disconnected state. Thus, the second and fourth clutches 70 and 66 are brought into a disengaged state.

### - Operation of Stepped Automatic Transmission 31 -

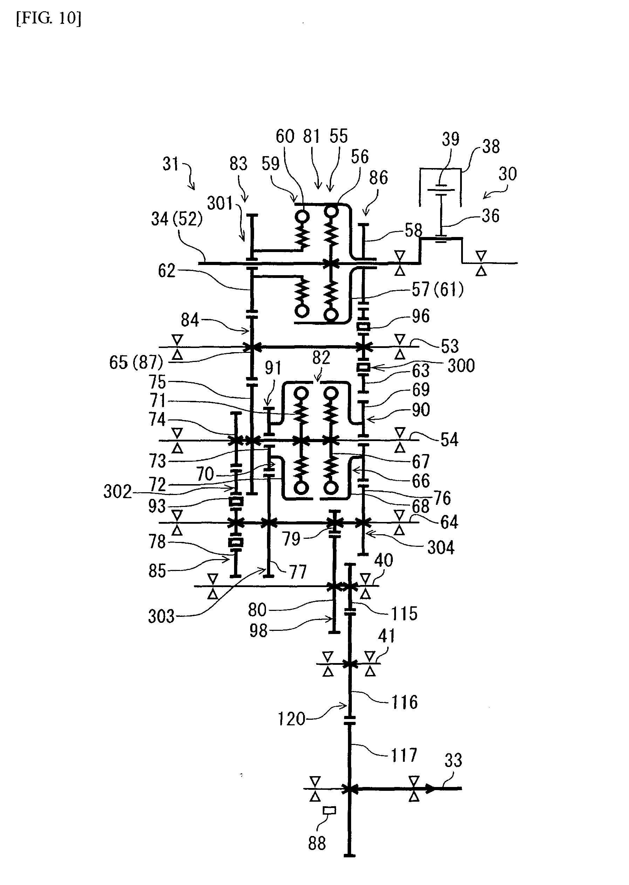

Next, the operation of the stepped automatic transmission 31 will be described in detail with reference to FIGS. 10 to 13 and the following table 1.

**[Table 1]**

| | | Shift Position | | | | |
|---|---|---|---|---|---|---|
| | | Idling | First Speed | Second Speed | Third Speed | Fourth Speed |
| Valve 143 | Internal Path 207 (for Second Speed) | Open | Open | Close | Close | Close |
| | Internal Path 149 (for Third Speed) | Close | Close | Close | Open | Close |
| | Internal Path 148 (for Fourth Speed) | Close | Close | Close | Close | Open |
| Clutch | First Clutch 55 | Disengagement | Engagement | Engagement | Engagement | Engagement |
| | Third Clutch 59 | Disengagement | Disengagement | Engagement | Engagement | Engagement |
| | Second Clutch 70 | Disengagement | Disengagement | Disengagement | Engagement | Disengagement |
| | Fourth Clutch 66 | Disengagement | Disengagement | Disengagement | Disengagement | Engagement |

### - When Engine is Stopped -

When the engine 30 is stopped, the oil pump 140 is in a stopped state. Accordingly, oil is not supplied to the second to fourth clutches 70, 59 and 66. Thus, the first clutch 55 as a centrifugal clutch and the second and fourth clutches 70 and 66 are in a disengaged state. In a state where oil is not supplied to the working chamber 205, the group of plates 200 is brought into a pressure contact state by the urging force of the compression coil spring 204 in the third clutch 59. Thus, the third clutch 59 is brought into an engaged state. However, as shown in FIG. 6, both the inner 60 and the outer 61 of the third clutch 59 can rotate with respect to the input shaft 52 when the first clutch 55 is in a disengaged state. Therefore, the rotation of the input shaft 52 is not transmitted to the output shaft 33.

### - In Idling -

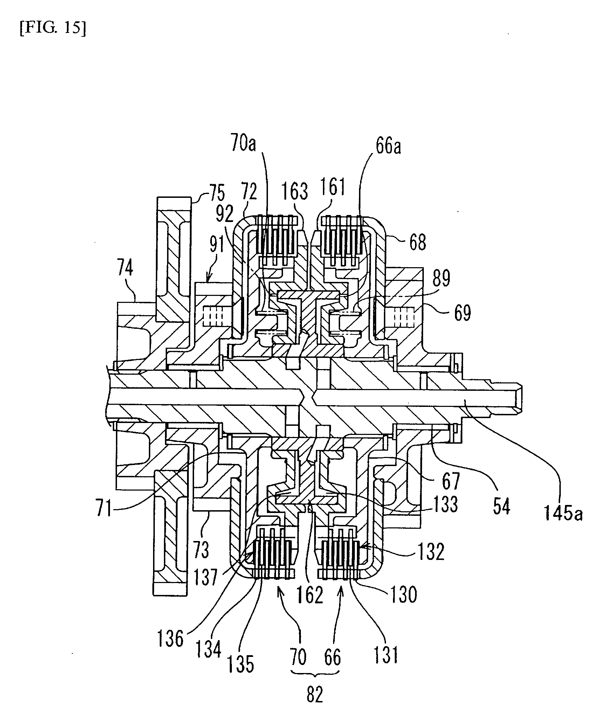

First, when the engine 30 is started, the rotation of the crank shaft 34 formed integrally with the input shaft 52 is started. Therefore, the driving of the oil pump 140 is started. As shown in the table 1, the valve 143 is disposed at the third rotation angle by the motor 150 in idling. Accordingly, in idling, the internal path 207 shown in FIG. 7 is connected to the first oil path 144 and the fourth oil path 211. Therefore, hydraulic pressure is supplied to the third clutch 59. On the other hand, the internal paths 148 and 149 are brought into a closed state. Consequently, hydraulic pressure is not supplied to the second and fourth clutches 70 and 66. In addition, in an idling state, the rotation speed of the input shaft 52 is lower than the rotation speed of the input shaft 52 when the first clutch 55 is engaged. Accordingly, as shown in the table 1 and FIGS. 7 and 15, the first, second, third and fourth clutches 55, 59, 70 and 66 are brought into a disengaged state.

As shown in the table 1, in idling, hydraulic pressure is applied to only the third clutch 59.

### - First Speed when Starting from Standstill -

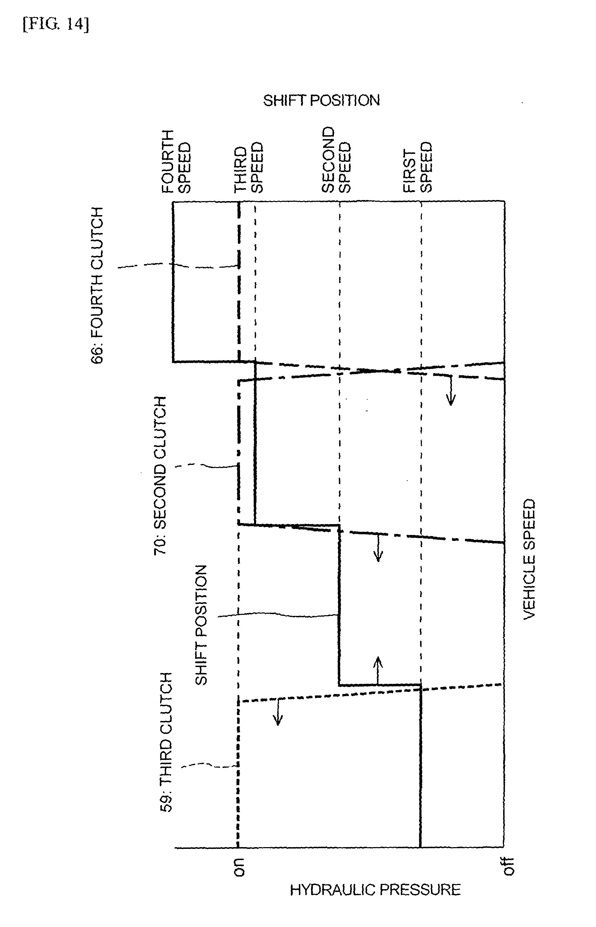

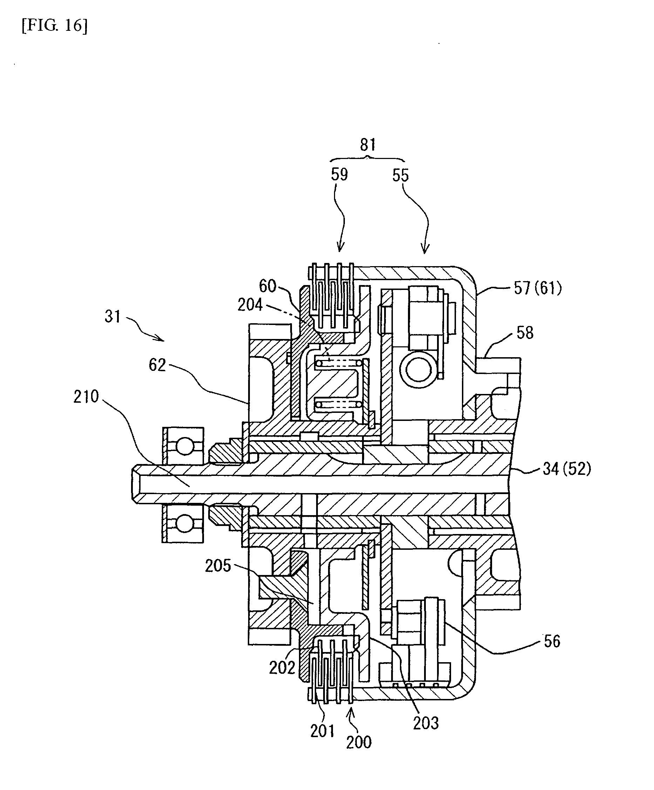

When the rotation speed of the input shaft 52 becomes equal to or higher than the predetermined third rotation speed, the first clutch 55 is brought into an engaged state as shown in FIG. 10. In the first speed, the valve 143 is disposed at the third rotation angle in the same manner as in idling. Therefore, as shown in the table 1 and FIG. 14, hydraulic pressure is supplied to only the third clutch 59. Thus, as shown in the table 1 and FIGS. 10, 15 and 16, the second to fourth clutches 70, 59 and 66 are in a disengaged state.

When the first clutch 55 is in an engaged state, the first pair of shift gears 86 rotates together with the outer 57 of the first clutch 55. Thus, the rotation of the input shaft 52 is transmitted to the first rotation shaft 53.

The third gear 87 rotates together with the first rotation shaft 53. Accordingly, the first pair of transmission gears 84 also rotates along with the rotation of the first rotation shaft 53. Thus, the rotation of the first rotation shaft 53 is transmitted to the second rotation shaft 54 via the first pair of transmission gears 84.

The fifth gear 74 rotates together with the second rotation shaft 54. Accordingly, the second pair of transmission gears 85 also rotates along with the rotation of the second rotation shaft 54. Thus, the rotation of the second rotation shaft 54 is transmitted to the third rotation shaft 64 via the second pair of transmission gears 85.

The thirteenth gear 79 rotates together with the third rotation shaft 64. Accordingly, the third pair of transmission gears 98 also rotates along with the rotation of the third rotation shaft 64. Thus, the rotation of the third rotation shaft 64 is transmitted to the fourth rotation shaft 40 via the third pair of transmission gears 98.

The fifteenth gear 115 rotates together with the fourth rotation shaft 40. Accordingly, the fourth pair of transmission gears 120 also rotates along with the rotation of the fourth rotation shaft 40. Thus, the rotation of the fourth rotation shaft 40 is transmitted to the output shaft 33 via the fourth pair of transmission gears 120.

In this manner, when the motorcycle 1 is started from standstill, that is, in the first speed, the rotation is transmitted from the input shaft 52 to the output shaft 33 via the first clutch 55, the first power transmission mechanism 300, the third power transmission mechanism 302, the third pair of transmission gears 98 and the fourth pair of transmission gears 120, as shown in FIG. 10.

The tenth gear 65 rotates together with the first rotation shaft 53. Accordingly, in the first speed, the third pair of shift gears 83 and the inner 60 of the third clutch 59 also rotate. However, in the first speed, the third clutch 59 is in a disengaged state. Thus, the rotation of the input shaft 52 is not transmitted to the first rotation shaft 53 via the third pair of shift gears 83.

Further, the eighth gear 77 and the twelfth gear 76 rotate together with the third rotation shaft 64. Accordingly, in the first speed, the second pair of shift gears 91 and the fourth pair of shift gears 90 also rotate. However, in the first speed, the second clutch 70 and the fourth clutch 66 are in a disengaged state. Thus, the rotation of the second rotation shaft 54 is not transmitted to the third rotation shaft 64 via the second pair of shift gears 91 and the fourth pair of shift gears 90.

### - Second Speed -

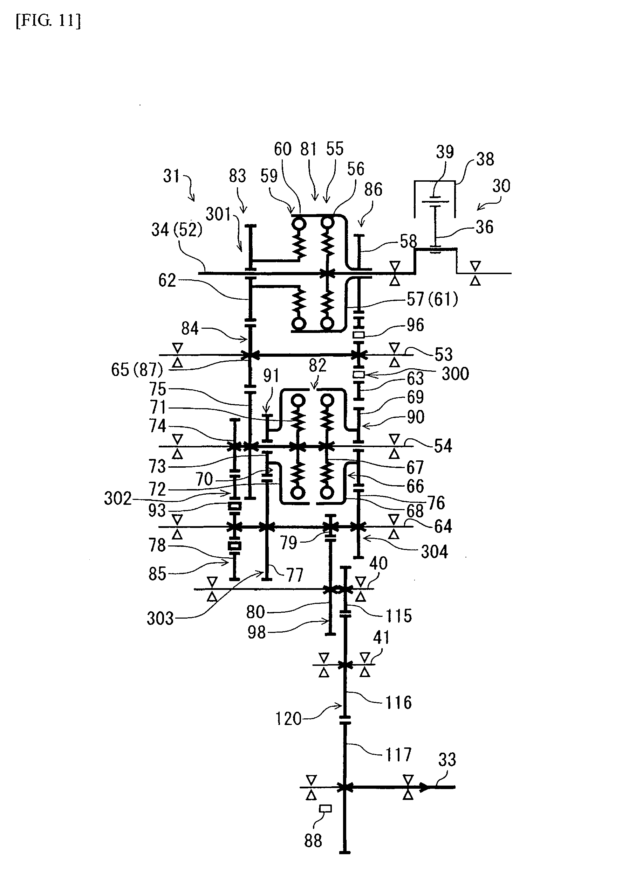

In the first speed, when the rotation speed of the crank shaft 34 reaches the first rotation speed and the vehicle speed reaches a predetermined speed, the valve 143 shown in FIG. 8 is driven by the motor 150 and the rotation angle of the valve 143 changes from the third rotation angle. Accordingly, the first oil path 144 and the fourth oil path 211 are disconnected. As a result, as shown in the table 1 and FIG. 14, in the second speed, hydraulic pressure is not supplied to any of the second to fourth clutches 70, 59 and 66. Thus, as shown in FIG. 11, the third clutch 59 is also in an engaged state together with the first clutch 55.

Note that, in this embodiment, the reduction gear ratio of the third pair of shift gears 83 is smaller than the gear ratio of the first pair of shift gears 86. As a result, the rotation speed of the tenth gear 65 is higher than the rotation speed of the second gear 63. Accordingly, in the second speed, the rotation is transmitted from the input shaft 52 to the first rotation shaft 53 via the third pair of shift gears 83. On the other hand, the rotation of the first rotation shaft 53 is not transmitted to the input shaft 52 by the one-way rotation transmission mechanism 96.

The rotation force is transmitted from the first rotation shaft 53 to the output shaft 33, in the same manner as in the first speed, via the first pair of transmission gears 84, the second pair of transmission gears 85, the third pair of transmission gears 98 and the fourth pair of transmission gears 120.

In this manner, in the second speed, the rotation is transmitted from the input shaft 52 to the output shaft 33 via the third clutch 59, the second power transmission mechanism 301, the third power transmission mechanism 302, the third pair of transmission gears 98 and the fourth pair of transmission gears 120, as shown in FIG. 11.

### - Third Speed -

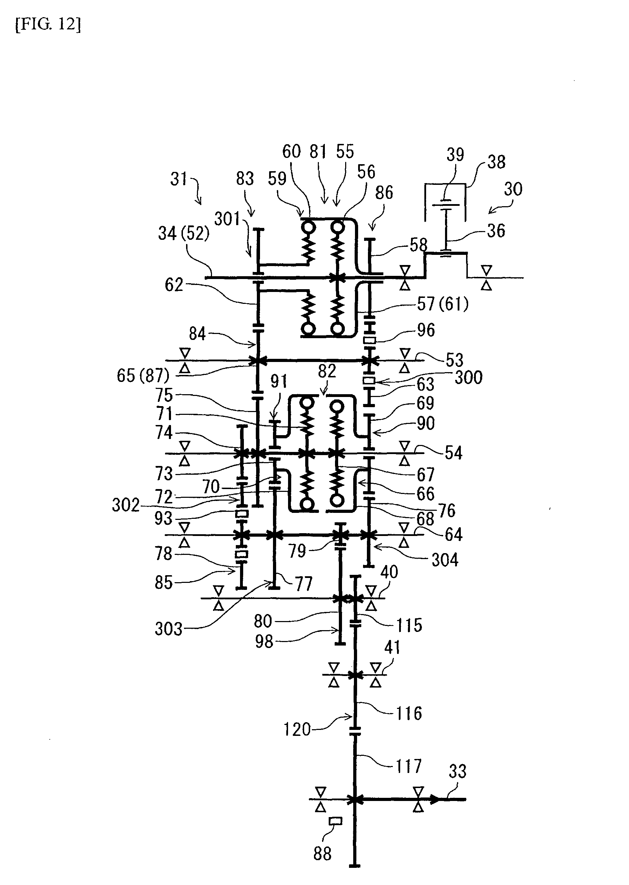

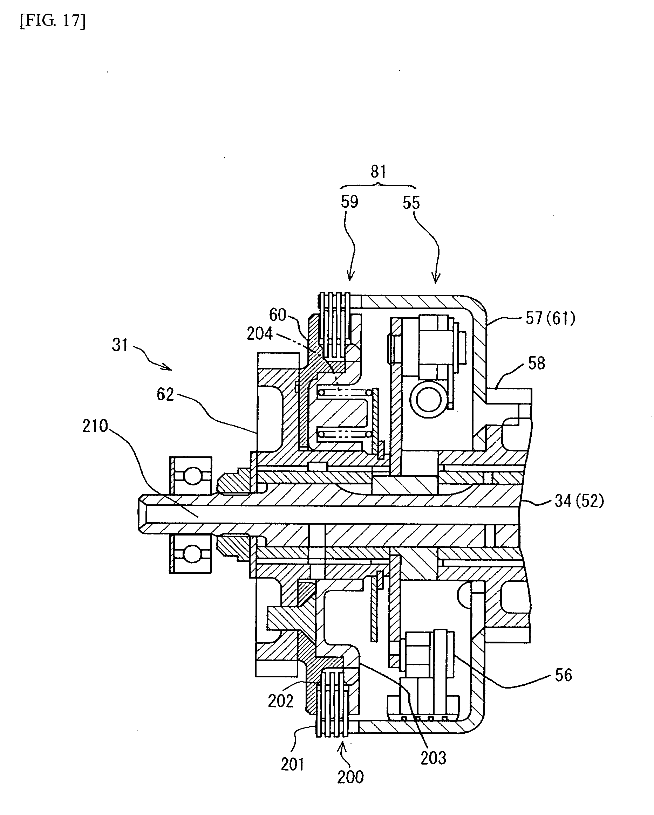

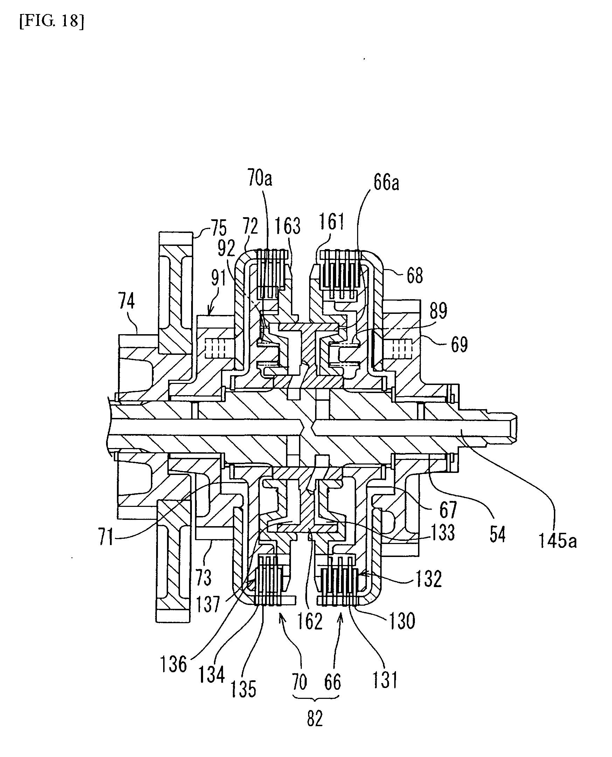

In the second speed, when the rotation speed of the crank shaft 34 formed integrally with the input shaft 52 becomes higher than the second rotation speed and the vehicle speed becomes equal to or higher than a predetermined vehicle speed, the valve 143 shown in FIG. 8 is driven and the position of the valve 143 is disposed at the first rotation angle. As a result, as shown in the table 1, the first oil path 144 and the third oil path 146 are connected via the internal path 149. Therefore, as shown in the table 1 and FIG. 14, hydraulic pressure is supplied to only the second clutch 70. Thus, as shown in the table 1 and FIGS. 12, 17 and 18, the first to third clutches 55, 70 and 59 are brought into an engaged state and the fourth clutch 66 is brought into a disengaged state.

Note that, the reduction gear ratio of the second pair of shift gears 91 is smaller than the reduction gear ratio of the second pair of transmission gears 85. Therefore, the rotation speed of the eighth gear 77 of the second pair of shift gears 91 becomes higher than the rotation speed of the sixth gear 78 of the third pair of shift gears 83. Thus, the rotation of the second rotation shaft 54 is transmitted to the third rotation shaft 64 via the second pair of shift gears 91. On the other hand, the rotation of the third rotation shaft 64 is not transmitted to the second rotation shaft 54 by the one-way rotation transmission mechanism 93.

The rotation of the third rotation shaft 64 is transmitted to the output shaft 33 via the third pair of transmission gears 98 and the fourth pair of transmission gears 120, in the same manner as in the first speed and the second speed.

In this manner, in the third speed, the rotation is transmitted from the input shaft 52 to the output shaft 33 via the third clutch 59, the second power transmission mechanism 301, the second clutch 70 and the fourth power transmission mechanism 303, as shown in FIG. 12.

### - Fourth Speed -

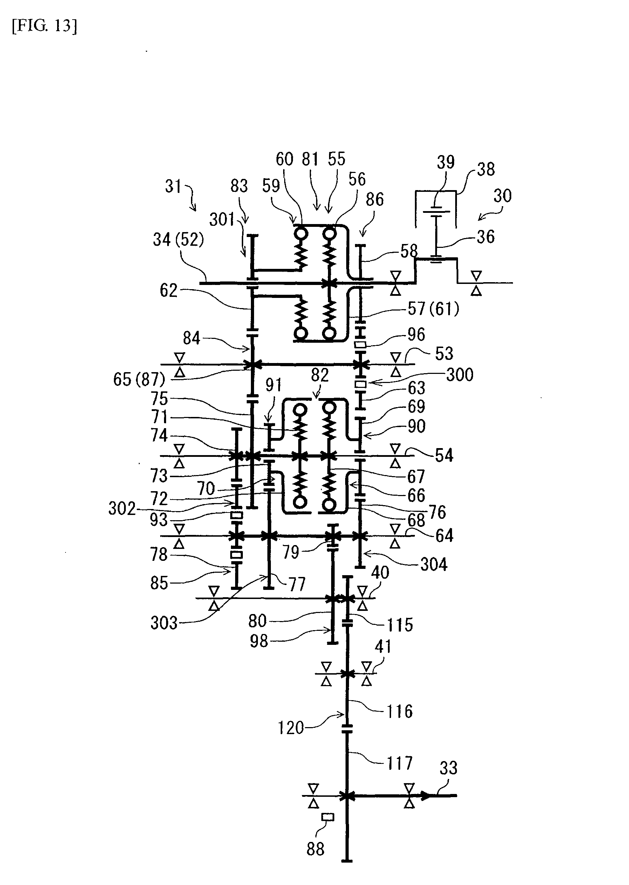

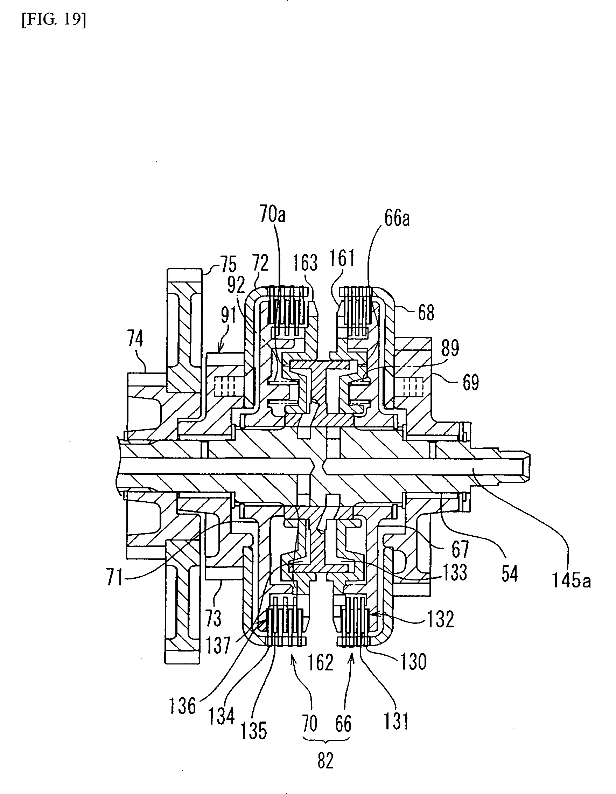

In the third speed, when the rotation speed of the crank shaft 34 formed integrally with the input shaft 52 further increases and the vehicle speed further increases as well, the valve 143 shown in FIG. 8 is driven and the position of the valve 143 is disposed at the second rotation angle. As a result, as shown in the table 1, the first oil path 144 and the second oil path 145 are connected via the internal path 148. Therefore, as shown in the table 1 and FIG. 14, hydraulic pressure is supplied to only the fourth clutch 66. Thus, as shown in the table 1 and FIGS. 13, 17 and 19, the first, third and fourth clutches 55, 59 and 66 are brought into an engaged state and the second clutch 70 is brought into a disengaged state.

Note that, the reduction gear ratio of the fourth pair of shift gears 90 is smaller than the reduction gear ratio of the second pair of transmission gears 85. Therefore, the rotation speed of the twelfth gear 76 of the fourth pair of shift gears 90 becomes higher than the rotation speed of the sixth gear 78 of the second pair of transmission gears 85. Thus, the rotation of the second rotation shaft 54 is transmitted to the third rotation shaft 64 via the fourth pair of shift gears 90. On the other hand, the rotation of the third rotation shaft 64 is not transmitted to the second rotation shaft 54 by the one-way rotation transmission mechanism 93.

The rotation of the third rotation shaft 64 is transmitted to the output shaft 33 via the third pair of transmission gears 98 and the fourth pair of transmission gears 120, in the same manner as in the first speed to the third speed.

In this manner, in the fourth speed, the rotation is transmitted from the input shaft 52 to the output shaft 33 via the third clutch 59, the second power transmission mechanism 301, the fourth clutch 66 and the fifth power transmission mechanism 304, as shown in FIG. 13.

In this embodiment, the second to fourth clutches 70, 59 and 66 are hydraulic clutches. Accordingly, high transmission timing setting freedom can be realized. In addition, a reasonable transmission timing can be easily obtained. Further, as compared with the case where the second to fourth clutches 70, 59 and 66 are centrifugal clutches, the energy loss in shift change can be reduced. Thus, high energy transmission efficiency can be realized.

The reason that the energy loss is reduced as compared with the case where the second to fourth clutches 70, 59 and 66 are centrifugal clutches is as follows. In case of a centrifugal clutch, the engaging force of the clutch is decided by the centrifugal force applied to a weight. Accordingly, when the rotation speed of the rotation shaft to which the clutch is attached gradually increases, the engaging force of the clutch also gradually increases. Therefore, as for the centrifugal clutch, time to engage the clutch becomes long. That is, a period of a so-called half-clutch state becomes long. As a result, the energy loss in shift change increases. On the other hand, in case of a hydraulic clutch, the engaging force of the clutch is controlled by the opening and closing of the valve. Accordingly, when the valve is opened, the engaging force of the clutch promptly increases. Therefore, as for the hydraulic clutch, time to engage the clutch is short. That is, a period of a so-called half-clutch state becomes short. As a result, the energy loss in shift change is reduced.

The stepped automatic transmission 31 in this embodiment is a four-speed stepped automatic transmission. Accordingly, for example, as compared with that of a two-speed stepped automatic transmission, high energy transmission efficiency can be realized.

In addition, in this embodiment, the first clutch 55 as a starting clutch is a centrifugal clutch. Accordingly, a smoother start from standstill can be achieved.

In addition, the first clutch 55 may be a hydraulic clutch. However, in this case, it is preferable that a torque converter is disposed upstream of the first clutch 55.

For example, it is conceivable that the third clutch 59 is a hydraulic clutch which is brought into a disengaged state when hydraulic pressure is not supplied and into an engaged state when the hydraulic pressure is supplied. However, in this case, in the third speed and the fourth speed, the third clutch 59 and the second or fourth clutch 70 or 66 are brought into an engaged state. In the third speed and the fourth speed, hydraulic pressure should be supplied from the oil pump 140 to two clutches. Accordingly, it is necessary to relatively increase the power of the oil pump 140. As a result, the oil pump 140 tends to grow in size.

In this embodiment, as described above, the third clutch 59 provided on the input shaft 52 positioned on the upstream side is brought into an engaged state when hydraulic pressure is not supplied and into a disengaged state when the hydraulic pressure is supplied. On the other hand, the second and fourth clutches 70 and 66 provided on the second rotation shaft 54 positioned on the downstream side are brought into an engaged state when hydraulic pressure is supplied and into a disengaged state when the hydraulic pressure is not supplied. Accordingly, as shown in the table 1 and FIG. 14, only one clutch to which hydraulic pressure is supplied corresponds to each shift position. Therefore, the power required for the oil pump 140 is small. As a result, the oil pump 140 can be miniaturized. Thus, the stepped automatic transmission 31 can be miniaturized.

Particularly, when the leak holes 70a, 203a and 66a are formed in the second to fourth clutches 70, 59 and 66 as in this embodiment, the power required for the oil pump 140 increases as compared with the case where the leak holes 70a, 203a and 66a are not formed. Accordingly, it is particularly effective that only one clutch to which hydraulic pressure is supplied corresponds to each shift position in the same manner as in this embodiment.

In addition, in this embodiment, the leak holes 70a, 203a and 66a are formed in the second to fourth clutches 70, 59 and 66, and thus the oil in the working chambers 137, 133 and 205 is rapidly discharged when the oil supply to the second to fourth clutches 70, 59 and 66 is stopped. Accordingly, the disengagement of the second to fourth clutches 70, 59 and 66 are promptly performed.

### «First Modified Example»

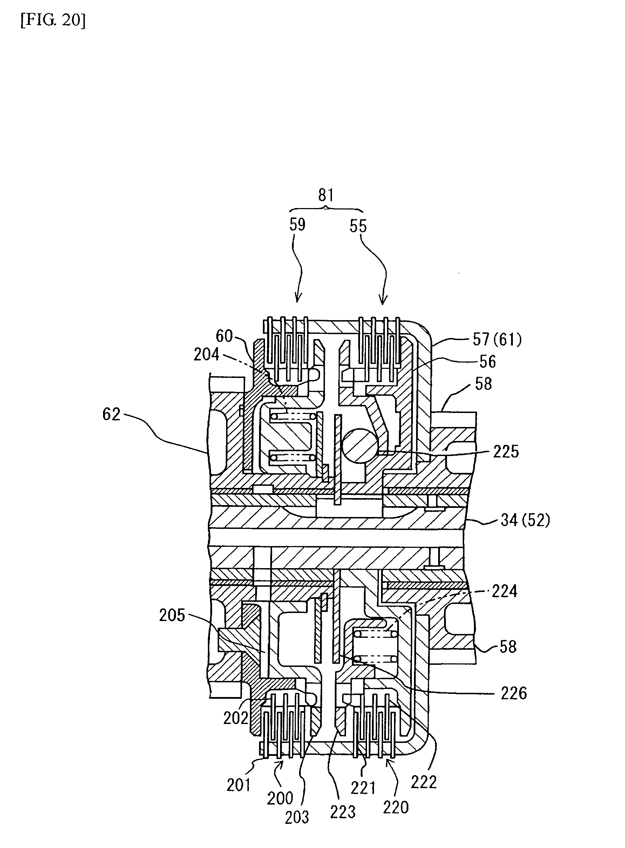

In the above-described embodiments, an example is explained in which the first clutch 55 is a shoe type centrifugal clutch. However, the invention is not limited to this structure. The first clutch 55 may be a hydraulic clutch. In addition, as shown in FIG. 20, the first clutch 55 may be a multiplate centrifugal clutch.

In this modified example, the first clutch 55 includes a group of plates 220. The group of plates 220 includes a plurality of friction plates 221 and a plurality of clutch plates 222. The plurality of friction plates 221 and the plurality of clutch plates 222 are alternately disposed in the axial direction of the crank shaft 34. The plurality of friction plates 221 cannot rotate with respect to the outer 57. The plurality of clutch plates 222 cannot rotate with respect to the inner 56.

A pressure plate 223 is disposed on the left side of the inner 56 in the vehicle width direction. The pressure plate 223 can be displaced in the vehicle width direction. The pressure plate 223 is urged to the left in the vehicle width direction by a compression coil spring 224.

A plate 226 is disposed on the left side of the pressure plate 223 in the vehicle width direction. The plate 226 cannot be displaced in the axial direction of the crank shaft 34. A spherical weight 225 is disposed between the plate 226 and the pressure plate 223.

In a state where the inner 56 does not rotate, centrifugal force does not act on the weight 225. Accordingly, the pressure plate 223 is pressed to the left in the vehicle width direction by an urging force of the compression coil spring 224. Therefore, the group of plates 220 is brought into a non-pressure contact state. As a result, the first clutch 55 is brought into a disengaged state.

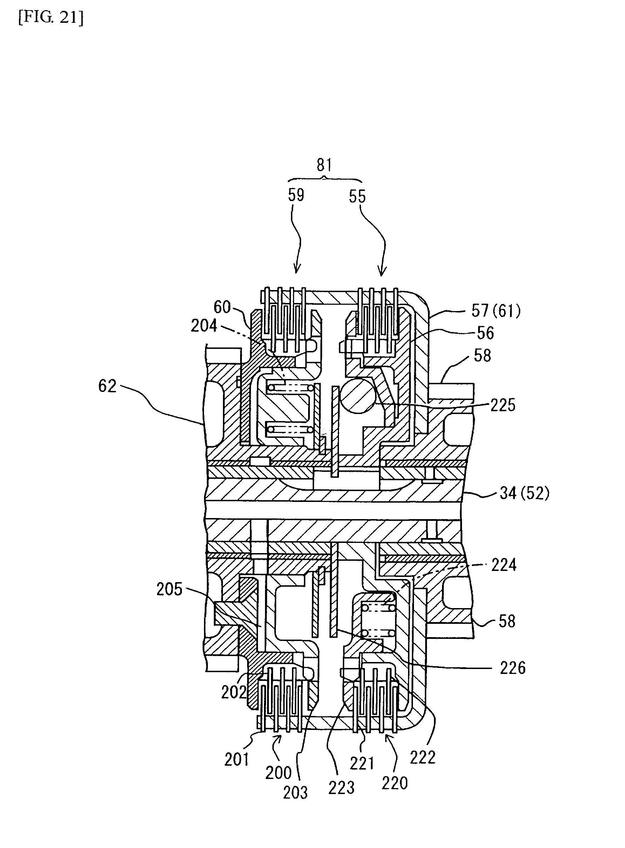

On the other hand, in a state where the inner 56 rotates, centrifugal force acts on the weight 225. When the centrifugal force acting on the weight 225 becomes larger than the urging force of the compression coil spring 224, the weight 225 moves to the outside in a radial direction while pressing the pressure plate 223 to the right in the vehicle width direction, as shown in FIG. 21. Accordingly, the group of plates 220 is brought into a pressure contact state. As a result, the first clutch 55 is brought into an engaged state.

### «Other Modified Examples»

In the above-described embodiments, the four-speed stepped automatic transmission is described as an example. However, the invention is not limited to this structure. For example, the stepped automatic transmission may have three or less speeds or five or more speeds. Specifically, when adopting a three-speed transmission, it is conceivable to adopt the stepped automatic transmission 31 structure shown in FIG. 6 without the fourth clutch 66 and the second pair of shift gears 90.

In the above-described embodiments, an example is explained in which the five intermediate shafts are disposed between the input shaft 52 and the output shaft 33. However, the invention is not limited to this structure. The number of the intermediate shafts disposed between the input shaft 52 and the output shaft 33 may be four or less. Specifically, for example, the fourth rotation shaft 40 and the fifth rotation shaft 41 may not be provided.

In the above-described embodiments, an example is explained in which the engine 30 is a single cylinder engine. However, in the invention, the engine 30 is not limited to a single cylinder engine. The engine 30 may be, for example, a multi-cylinder engine such as a two cylinder engine.

In the above-described embodiments, an example is explained in which the pairs of gears mesh directly with each other. However, the invention is not limited to this structure. The pairs of gears may mesh indirectly via separately provided gears.

## Claims

1. A stepped automatic transmission having an input shaft and an output shaft, the stepped automatic transmission comprising:
an intermediate shaft which is disposed between the input shaft and the output shaft on a power transmission path;
a first hydraulic transmission clutch which is engaged when the rotation speed of the input shaft reaches a first rotation speed;
a first power transmission mechanism for transmitting the rotation of the input shaft to the intermediate shaft when the first hydraulic transmission clutch is disengaged;
a second power transmission mechanism for transmitting the rotation of the input shaft to the intermediate shaft at a reduction gear ratio smaller than that of the first power transmission mechanism when the first hydraulic transmission clutch is engaged;
a second hydraulic transmission clutch which is engaged when the rotation speed of the intermediate shaft reaches a second rotation speed higher than the rotation speed of the intermediate shaft when the first hydraulic transmission clutch is engaged;
a third power transmission mechanism for transmitting the rotation of the intermediate shaft to the output shaft when the second hydraulic transmission clutch is disengaged;
a fourth power transmission mechanism for transmitting the rotation of the intermediate shaft to the output shaft at a reduction gear ratio different from that of the third power transmission mechanism when the second hydraulic transmission clutch is engaged; and
an oil pump for applying hydraulic pressure to the first and second hydraulic transmission clutches,
wherein the first hydraulic clutch is brought into a disengaged state when hydraulic pressure is applied and into an engaged state when the hydraulic pressure is not applied.

2. The stepped automatic transmission according to Claim 1, further comprising:
a third hydraulic transmission clutch which is engaged when the rotation speed of the intermediate shaft reaches a third rotation speed higher than the second rotation speed; and
a fifth power transmission mechanism for transmitting the rotation of the intermediate shaft to the output shaft at a reduction gear ratio smaller than that of the third power rotation mechanism or the fourth power rotation mechanism when the third hydraulic transmission clutch is engaged,
wherein the second hydraulic transmission clutch is brought into a disengaged state when the third hydraulic transmission clutch is engaged, and
wherein the third power transmission mechanism transmits the rotation of the intermediate shaft to the output shaft at a reduction gear ratio larger than that of the fourth power transmission mechanism when the third hydraulic transmission clutch is disengaged.

3. The stepped automatic transmission according to Claim 1, further comprising:
a centrifugal clutch which is engaged when the rotation speed of the input shaft is a fourth rotation speed lower than the first rotation speed,
wherein the first power transmission mechanism transmits the rotation of the input shaft to the intermediate shaft when the centrifugal clutch is in an engaged state.

4. The stepped automatic transmission according to Claim 1,
wherein a working chamber to which oil is supplied from the oil pump and a communicating hole communicating with the working chamber are formed in at least one of the first and second hydraulic transmission clutches.

5. The stepped automatic transmission according to Claim 1,
wherein the communicating hole is a leak hole for leaking the oil from the working chamber.

6. The stepped automatic transmission according to Claim 1,
wherein the oil pump is driven by the rotation of the input shaft.

7. A vehicle comprising the stepped automatic transmission according to Claim 1.
